# EUROPEAN PATENT SPECIFICATION

(11) **EP 1 193 436 B1**
(45) Date of publication and mention of the grant of the patent: **11.05.2005**
(21) Application number: 01118759.8
(22) Date of filing: 07.08.2001
(51) Int. Cl.: F16L 5/10, B60R 16/02, H02G 3/22

(54) **A grommet**
Dichtungstülle
Manchon d'étanchéité

(30) Priority: 29.09.2000 JP 2000300712; 29.09.2000 JP 2000300679
(43) Date of publication of application: 03.04.2002
(73) Proprietor: Sumitomo Wiring Systems, Ltd., Yokkaichi-City, Mie, 510-8503 (JP)
(72) Inventor: Nakata, Hiroyuki, Sumitomo Wiring Systems, Ltd., Yokkaichi-city, Mie 510-8503 (JP); Hashimoto, Takeshi, Sumitomo Wiring Systems, Ltd., Yokkaichi-city, Mie 510-8503 (JP)
(74) Representative: Müller-Boré & Partner Patentanwälte

(56) References cited:
- EP-A- 0 580 130
- EP-A- 1 013 508
- JP-U- 4 042 982
- US-A- 4 685 173
- PATENT ABSTRACTS OF JAPAN vol. 1997, no. 08, 29 August 1997 (1997-08-29) & JP 09 092060 A (SUMITOMO WIRING SYST LTD), 4 April 1997 (1997-04-04)

## Description

The present invention relates to a grommet and particularly to a grommet to be assembled into a wiring harness to be arranged in an automotive vehicle and mounted in a through hole formed in a body panel to protect the wiring harness and make a portion where the wiring harness is introduced into the through hole waterproof, dustproof and soundproof.

Conventionally, a grommet has been mounted on a wiring harness to be arranged from an engine compartment to a passenger compartment of an automotive vehicle and mounted in a through hole formed in a body panel partitioning the engine compartment and the passenger compartment to protect the wiring harness introduced into the through hole and protect the passenger compartment from entrance of water, dust and sound from the engine compartment.

As a grommet of this type is known a so-called "one-motion grommet" which is provided at its outer periphery with a body locking recess to be engaged with the surrounding edge of a through hole of a body panel only by pushing the grommet into the through hole in one direction. An advantage of the one-motion grommet is a good mountability.

European patent application EP-A-1 013 508 discloses a grommet having a resilient flange for mounting on a panel. The flange is an axial extension with increasing diameter of a small diameter tube portion through which a bundle of wires are introduced in close contact.

US-A-4,685,173 discloses a one-piece grommet having a central elongated tubular portion surrounded by a cylindrical rim portion. One end of the rim portion is formed with a continuous laterally extending mounting flange spaced from an annular detent shoulder defining an annular groove for securing the grommet in a panel opening. A thin-walled resilient frusto-conical web portion connects the rim portion to the tubular portion. The web small diameter end forms a juncture with one end of the rim portion in the transverse plane of the annular groove while the web large diameter end forms a juncture with the rim portion other end at a predetermined axial distance from the transverse plane. This offset web arrangement allows the tubular portion to be positioned at any desired angle relative to the panel while maintaining the grommet annular groove in sealed engagement with the panel opening.

EP-A-0 580 130 discloses a grommet comprising a rubber-made inner member having at least an insertion hole through which the lead wire is passed as tightly fitted and a slit through which the lead wire is set into the insertion hole. Also the grommet comprises a rubber-made outer member having a retention hole in which the inner member is retained as tightly fitted, and an engagement groove at which the outer member is tightly fitted on the edge of the opening in the wall.

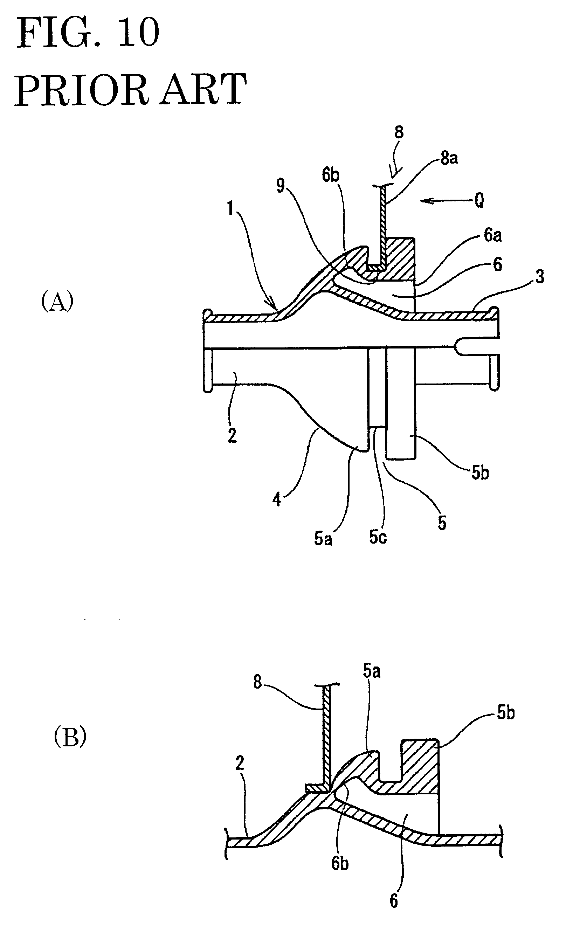

Another one-motion grommet shown in FIG. 10 is disclosed in Japanese Unexamined Utility Model Publication No. 4-42982.

The grommet 1 is such that a widened tube portion 4 is provided between small-diameter tube portions 2, 3 at its opposite sides, a body locking recess 5 is formed in the outer circumferential surface of the widened tube portion 4, and a cut-away portion 6 is formed at the radially inner side of the body locking recess.

The grommet 1 is pushed in a direction of arrow Q from an engine compartment (X) side to a passenger compartment (Y) side. At this time, a slanted wall 5a of the body locking recess 5 is deformed inwardly by the presence of the cut-away portion 6, thereby enabled to pass through a through hole 9 formed in a body panel 8. The slanted wall 5a is restored to its original shape after passing through the through hole 9, so that the body panel 8 is locked between the slanted wall 5a and an other side wall 5b.

In the above grommet 1, the cut-away portion 6 extends from an opening 6a beyond a position radially inwardly of the body locking recess 5 in order to facilitate the deformation of the slanted wall 5a while the grommet 1 is being pushed into the through hole 9, and is bent radially outwardly beyond that position, so that a back end 6b of the cut-away portion 6 reaches substantially the same position as a groove bottom surface 5c of the body locking recess 5.

However, if the cut-away portion 6 is formed as above, the slanted wall 5a is likely to be deformed outwardly when the body panel 8 is brought into contact with an outer circumferential surface 4a of the widened portion 4 where the back end 6b of the cut-away portion 6 is located since a base portion of the slanted wall 5a is thinner at its outer circumferential side than at its inner circumferential side. If the slanted wall 5a is deformed outwardly instead of inwardly, it comes into abutment against a wall surface 8a of the body panel 8 at a side from which the grommet 1 is pushed as shown in FIG. 10(B), making it difficult to insert the grommet 1 into the through hole 9. In other words, the presence of the cut-away portion 6 formed to facilitate the inward deformation of the slanted wall 5a causes the slanted wall 5a to be deformed outwardly which is a direction opposite from the desired direction. This results in a reduced operability of inserting the grommet 1 into the through hole 9 and a larger required insertion force.

Further, in the case that the through hole of the body panel is oblong, the cut-away portion 6 is large along a longer axis while being small along a shorter axis since the small-diameter tube portion 3 is usually circular. If the cut-away portion becomes excessively large along the longer axis, the surrounding wall where the body locking recess is formed enters the cut-away portion, with the result that the body locking recess may pass through the through hole.

If the cut-away portion is formed inside the side wall of the body locking recess to facilitate the inward deformation of the side wall of the recess, the side wall may be excessively inclined inwardly to cause the body locking recess to pass through the through hole, not only in the case that the grommet is pushed into the through hole of the body panel, but also in the case that it is pulled therethrough, further not only in the case that the through hole is oblong and the widened tube portion formed with the body locking recess is circular, but also in the case that the through hole and the widened tube portion are both circular.

In view of the above problems, an object of the present invention is to improve a mountability of a grommet by its flexing radially inwardly to a sufficient degree during insertion of the grommet into a through hole formed in a body panel.

This object is solved according to the invention by a grommet according to claim 1. Preferred embodiments of the invention are subject of the dependent claims.

According to the invention, there is provided a grommet which is insertable into a through hole formed in a body panel in one direction to be engaged with the through hole while being mounted on a wiring harness, comprising:
a first small-diameter tube portion and a second small-diameter tube portion provided at the opposite sides of the grommet with respect to longitudinal direction,
a widened tube portion provided between the first and second small-diameter tube portions,
a cut-away portion which is substantially continuous with the second small-diameter tube portion, thereby branching the widened tube portion into an outer tube and an inner tube substantially continuous with the second small-diameter tube portion, and
a body locking recess defined in the outer tube, the body locking recess being located more backward than a forward end position of the cut-away portion along the longitudinal direction of the grommet,
wherein the forward end position of the cut-away portion is located more radially inwardly than a bottom portion of the body locking recess, so that when the body panel is brought into contact with the portion of the outer tube at an insertion side while the grommet is being pushed into the through hole formed in the body panel, at least a portion of the outer tube is deformed toward the cut-away portion, wherein the back side of the cut away portion has a straight outer circumferential surface which is located more radially inwardly than a bottom portion of the body locking recess , so that at least a portion of the outer tube is deformed inwardly when the slanted wall comes into contact with the body panel upon passing through the through hole and the opening side of the cut-away portion located radially inwardly of a radial wall of the outer tube has an outer circumferential surface slanted to widen toward an opening end of the cut-away portion and which is continuous with said straight outer circumferential surface .

According to a preferred embodiment of the invention, the cut-away portion is formed to extend forward from the rear end surface of the widened tube portion

Preferably, the body locking recess is defined by a slanted wall and a substantially radial wall which project from the outer circumferential surface of a portion of the outer tube.

Since the base end position of the slanted wall which comes into contact with the body panel when the above grommet is pushed into the through hole is located more radially outward than the back end of the cut-away portion, there is no likelihood, unlike the prior art, that the slanted wall is deformed outwardly to come into abutment against the body panel. The slanted wall is deformed inwardly of the cut-away portion, thereby smoothening the pushing operation.

Further, when the slanted wall is deformed toward the inner side of the cut-away portion, the outer tube having the slanted wall formed thereon can be easily deformed toward the cut-away portion since the opening side of the cut-away portion is widened. Therefore, the one-motion grommet can be mounted on the body panel with a small insertion force.

Preferably, the base end of the slanted wall on the outer tube branched by the cut-away portion is thicker than a portion of the inner tube substantially continuous with the second small-diameter tube portion, so that the inner tube is first deformed to deform the outer tube inwardly when the body panel is brought into contact with the slanted wall projecting from the outer tube.

If the outer tube at the base end of the slanted wall is thicker than the inner tube, a pushing force first acts on the thinner inner tube to thereby deform the inner tube when the body panel comes into abutment against the slanted wall to push it.

Further preferably, a portion of the inner tube branched by the cut-away portion and continuous with the second small-diameter tube portion is made thinner than a base portion thereof branched from the outer tube. Thus, when the body panel is brought into contact with the slanted wall of the body locking recess, the thinner portion of the inner tube is first longitudinally pushed thereby causing the thicker base portion to deform in a direction toward the center of the inner tube or radially inwardly and to cause the slanted wall of the outer tube to radially inwardly deform about the back end of the cut-away portion.

According to still a further preferred embodiment, the grommet further comprises:
an inclination preventing projection formed on the outer circumferential surface of the inner tube along longitudinal direction to prevent the outer tube from in-clining.

Since the base end position of the slanted wall to be brought into contact with the body panel is located more radially outward than the back end of the cut-away portion in the above grommet, the slanted wall is, unlike the prior art, deformed toward the inner side of the cut-away portion without being deformed outwardly to contact the body panel. Thus, a pushing operation can be smoothly performed.

Further, when the slanted wall is deformed toward the inner side of the cut-away portion, the outer tube formed with the slanted wall can be easily deformed toward the cut-away portion since the opening side of the cut-away portion is widened.

Therefore, the one-motion grommet can be mounted on the body panel with a small insertion force.

As described above, the grommet can be introduced through the through hole of the body panel with a small insertion force by providing the cut-away portion to facilitate deformation. On the other hand, since the inclination preventing projection is provided on the outer circumferential surface of the inner tube of the cut-away portion, when the outer tube formed with the body locking recess is inclined toward the cut-away portion, the outer tube comes into contact with the projection, thereby preventing the grommet from passing through the through hole.

Preferably, the outer tube of the widened tube portion has an oblong cross section, the inner tube has a substantially circular cross section, the inclination preventing projection is provided on an outer circumferential surface of the inner tube corresponding to a longer axis side.

Further preferably, the inclination preventing projection is provided so that a distance between the projecting end of the inclination preventing projection and the inner circumferential surface of the outer tube is substantially the same as a distance between the outer circumferential surface of the inner tube and the inner circumferential surface of the outer tube at a shorter axis side.

In the case that the through hole of the body panel is oblong, the outer tube of the widened tube portion has an oblong cross section and the inner tube through which the wiring harness is introduced has a substantially circular cross section. Thus, a clearance between the inner tube and the outer tube is widened at a longer axis side while being narrowed at a shorter axis side.

Accordingly, the inclination preventing projection is provided on the outer circumferential surface of the inner tube at the longer axis side, so that a distance between the projecting end of the inclination preventing projection and the inner circumferential surface of the outer tube is substantially the same as a distance between the outer circumferential surface of the inner tube and the inner circumferential surface of the outer tube at the shorter axis side.

As described above, in the case that the widened tube portion of the grommet is oblong, the space of the cut-away portion at the longer axis side is large. However, since the projection is provided on the outer circumferential surface of the inner tube at the longer axis side, a degree of deformation of the outer tube is restricted by the projection when the outer tube formed with the body locking recess is deformed toward the cut-away portion, thereby preventing an occurrence of an undesirable event where the body locking recess is excessively deformed inwardly to pass through the through hole of the body panel.

Most preferably, the inclination preventing projection projects a longer distance at the opening end side of the cut-away portion.

Since the inward inclination of the outer tube is restricted, the projecting distance of the projection is made larger at a portion corresponding to an outwardly widened portion of the outer tube.

These and other objects, features and advantages of the present invention will become more apparent upon reading of the following detailed description of preferred embodiments and accompanying drawings.
FIG. 1 is a section of a grommet according to a first embodiment of the invention,
FIG. 2 is a section showing a mounted state of the grommet on a body panel,
FIGS. 3(A) and 3(B) are enlarged sections showing an essential portion of the grommet,
FIG. 4 is a section of a grommet according to a second embodiment of the invention,
FIG. 5 is a right side view of the grommet,
FIG. 6 is a section along III-III of FIG. 5,
FIGS. 7(A) and 7(B) are enlarged sections showing a portion of the grommet,
FIG. 8 is a section showing a mounted state of the grommet on a body panel,
FIG. 9 is a right side view of a grommet according to a third embodiment of the invention, and
FIGS. 10(A) and 10(B) are sections showing a prior art grommet.

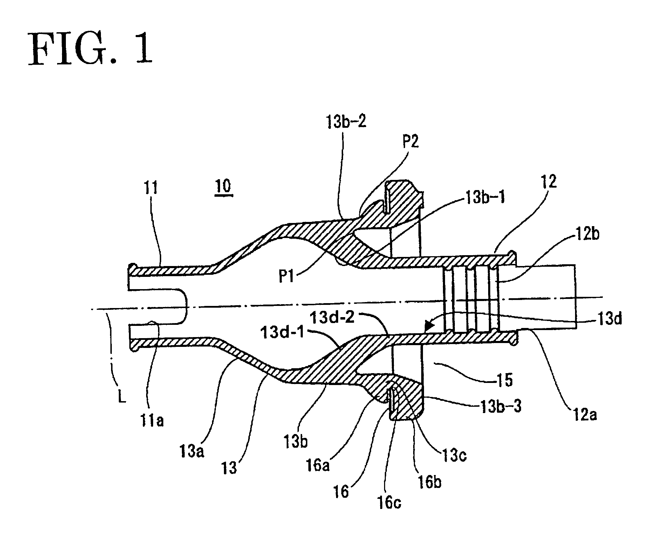

Hereinafter, a first preferred embodiment of the present invention is described with reference to the accompanying FIGS. 1 to 3.

As shown in FIG. 1, a grommet 10 according to this embodiment is integrally or unitarily formed of a resilient material, e.g. a rubber or elastomer and is such that a widened tube portion 13 is continuously formed between first and second small-diameter tube portion 11, 12 which are provided at front and rear sides with respect to insertion direction Q.

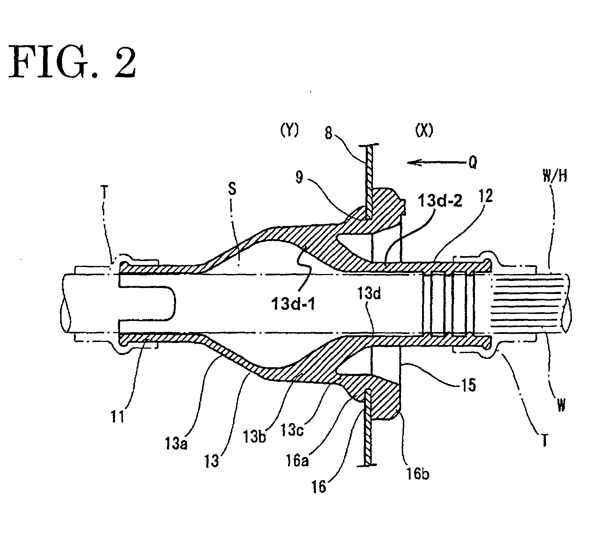

As shown in FIG. 2, a bundle of wires W of a wiring harness W/H is or can be introduced or inserted or fitted into the grommet 10 along a center axis L extending through the first small-diameter tube portion 11, the widened tube portion 13 and the second small-diameter tube portion 12, and is or can be fixed preferably by winding a tape T with the wire bundle W held in close contact with the inner circumferential surfaces of the first and second small-diameter tube portions 11, 12. A sealed sound-insulating space S is provided between the inner circumferential surface of the widened tube portion 13 and the wire bundle W.

The grommet 10 is or can be at least partly pushed or inserted into the through hole 9 formed in the body panel 8 in a direction of arrow Q from a first side, e.g. an engine compartment (X) while being mounted on the wiring harness W/H, thereby at least partly engaging a body locking recess 16 formed in the outer circumferential surface of the widened tube portion 13 with the periphery of the through hole 9 substantially in one motion.

The widened tube portion 13 includes a conic or widening portion 13a which is substantially continuous with the first small-diameter tube portion 11 and then slanted to widen its diameter, and a large-diameter portion 13b substantially continuous with the conic portion 13a. The large-diameter portion 13b has an inner circumferential surface 13b-1 whose diameter decreases toward the second small-diameter tube portion 12 and an outer circumferential surface 13b-2 which is slanted at a relatively small or fine angle to widen its diameter toward the rear end, i.e. in the form of a substantially straight tube having substantially the same outer diameter.

The large-diameter portion 13b is formed with an annular cut-away portion 15 which is open in a rear end surface 13b-3 thereof. The large-diameter portion 13b is branched into an outer tube 13c and an inner tube 13d by the cut-away portion 15, and the inner tube 13d is substantially continuous with the second small-diameter tube portion 12.

The body locking recess 16 is formed at the rear part of the outer circumferential surface of the outer tube 13c as described above. The body locking recess 16 is comprised of a slanted wall 16a projecting from the outer circumferential surface 13b-2 and slanting in the same or similar direction or way as the conic portion 13c, a radial, preferably substantially vertical wall 16b facing or corresponding to the slanted wall 16a, and a groove bottom surface 16c formed between the slanted wall 16a and the vertical wall 16b. Accordingly, the groove bottom surface 16c is located at the position of the outer circumferential surface 13b-2 of the large-diameter portion 13b (outer circumferential surface of the outer tube 13c). The vertical wall 16b radially projects more than the slanted wall 16c and has such a large thickness or projecting portion as to longitudinally reach the rear end of the outer tube 13c. In other words, the radial wall 16b has a greater diameter than the outer tube 13c but its projecting front end has a corresponding longitudinal position as the rear end of the outer tube 13c along the direction L.

An opening side 15a of the cut-away portion 15 located radially inwardly of the vertical wall 16b has such an outer circumferential surface whose diameter is gradually widened in radially outward direction and a substantially straight inner circumferential surface 15a-2 which is substantially continuous with the outer circumferential surface of the second small-diameter tube portion 12, i.e. the opening side 15a has a substantially trapezoidal cross section. On the other hand, a back or inner side 15b of the cut-away portion 15 located radially inwardly of the slanted wall 16a has a straight outer circumferential surface 15b-1 continuous with the outer circumferential surface 15a-1 and an inner circumferential surface 15b-2 slanted in radially outward direction, i.e. the back side 15b has a substantially triangular cross section. Thus, the front end P1 of the cut-away portion 15 is located at a position radially more inward than a portion of the slanted wall 16a of the outer tube 13c so that the through hole 9 of the body panel 8 may come into contact with the slanted surface 16a in a position P2 located radially more outward than the cut-away portion 15 so that the outer tube 13c can easily be deflected towards the inner tube 13d. In other words, the inner tube 13d is comprised of a base portion 13d-1 which is branched off from the outer tube 13c, thick and slanted backward, and a thinner portion 13d-2 which horizontally extends from the leading end of the thicker base portion 13d-1 and is continuos with the second small-diameter tube portion 12.

Further, unlike the prior art, the back side 15b or the outer circumferential surface 15b-1 of the cut-away portion 15 is not slanted in radially outward direction and is therefore located more radially inwardly than the groove bottom surface 16c of the body locking recess 16 and/or than the position P2.

A boundary between the opening side 15a and the back side 15b is preferably located at a position substantially corresponding to the groove bottom surface 16c of the body locking recess 16, and a back end position P1 of the back side 15b is located more backward (forard with respect to the insertion direction) than a base end position P2 of the slanted wall 16a.

The first small-diameter tube portion 11 is formed with a pair of large notches 11a which extend from the front end, whereas the second small-diameter tube portion 12 is formed with substantially annular ribs 12a on the inner circumferential surface of its portion continuous with the inner tube 13d of the large-diameter portion 13b.

An operation of mounting the grommet 10 thus constructed on the wiring harness W/H as shown in FIG. 2 and at least partly pushing or inserting it into the through hole 9 formed in the body panel 8 from the first side, e.g. the engine compartment (X) to a second side, e.g. a passenger compartment (Y) is described.

When the grommet 10 is pushed into the through hole 9 from the first small-diameter tube portion 11, it can easily pass therethrough until the large-diameter portion 13b is reached since the inner diameter of the through hole 9 preferably is substantially equal to the outer diameter of the large-diameter portion 13b. When the large-diameter portion 13b is reached, the grommet 10 passes through the through hole 9 while being held in sliding contact with the inner circumferential surface of the through hole 9.

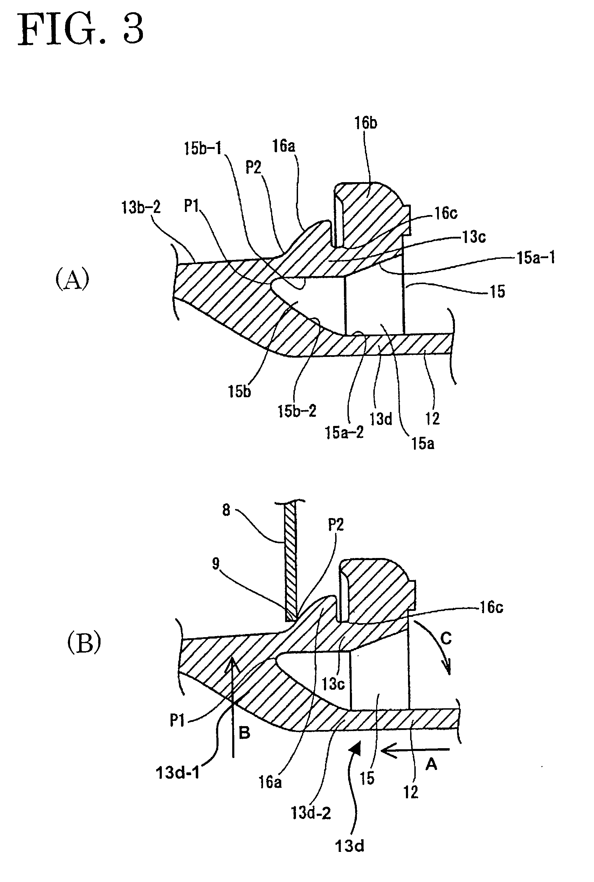

As shown in FIG. 3(B), after the base end P1 of the cut-away portion 15 passes through the through hole 9, the slanted wall 16a of the body locking recess 16 projecting from the outer circumferential surface of the outer tube 13c comes into contact with the body panel 8. Although the slanted wall 16a is pushed radially inwardly, the base portion of the slanted wall 16a is not easily deformed because being thick, and the thinner portion 13d-2 of the inner tube 13d is first pushed in insertion direction as indicated by an arrow A in FIG. 3(B). As a result, the base portion 13d-1 of the inner tube 13d is deformed radially outwardly or away from the center of the inner tube 13d as indicated by an arrow B. This deformation of the inner tube 13d causes the outer tube 13c to pivot in a direction of an arrow C about the back end P1 of the cut-away portion 15, thereby deforming the slanted wall 16a and the vertical wall 16b of the body locking recess 16 to enter the cut-away portion 15. At this time, since the opening side 15a of the cut-away portion 15 is wide, the outer tube 13c is permitted to radially inwardly deform.

In this way, since the outer tube 13c is deformed inwardly when the slanted wall 16a comes into contact with the body panel 8, the slanted wall 16a can easily pass through the through hole 9 with a small insertion force. When the body panel 8 is brought into contact with the slanted wall 16a during passage, the slanted wall 16a passes through the through hole 9 while deforming the outer tube 13c inwardly instead of outwardly.

Upon passing through the through hole 9, the slanted wall 16a is restored preferably to its substantially original shape to tightly hold the body panel 8 in cooperation with the vertical wall 16b, and the grommet 10 is mounted on the body panel 8 with the inner circumferential surface of the through hole 9 preferably held substantially in contact with the groove bottom surface 16c.

Thus, the grommet 10 can be locked by one pushing motion in one direction Q from the engine compartment (X) while being inserted into the through hole 9 formed in the body panel 8.

As is clear from the above description, the position of the cut-away portion is set more radially inward than the base end position of the slanted wall to be deformed inwardly upon coming into contact with the body panel in the grommet according to the present invention. Thus, the slanted wall never fails to be deformed toward the inner side of the cut-away, with the result that the grommet pushing operation can be smoothly performed with a small insertion force.

Further, since the cut-away portion is widened at its opening side, the outer tube provided with the slanted wall and the vertical wall forming the body locking recess can be easily deformed toward the cut-away portion. Therefore, the insertion force required to mount the grommet can be further reduced.

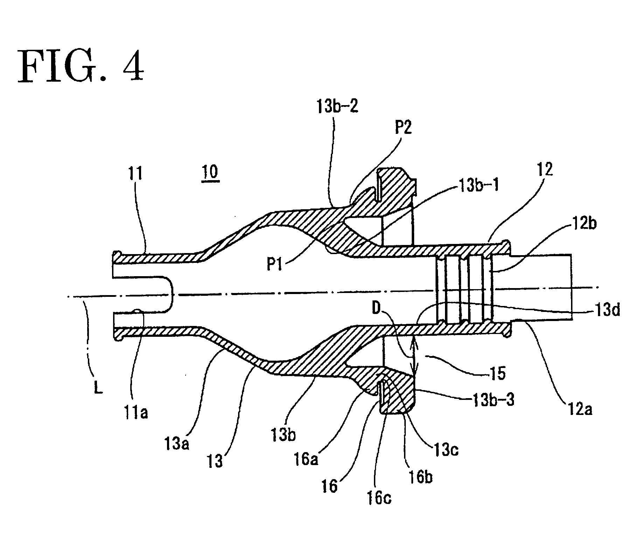

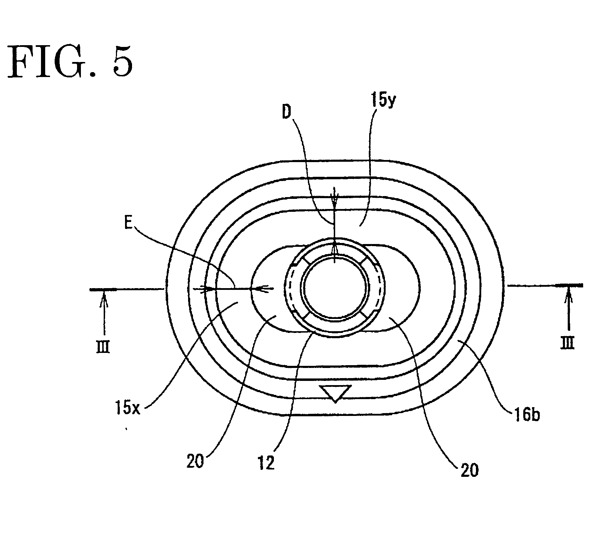

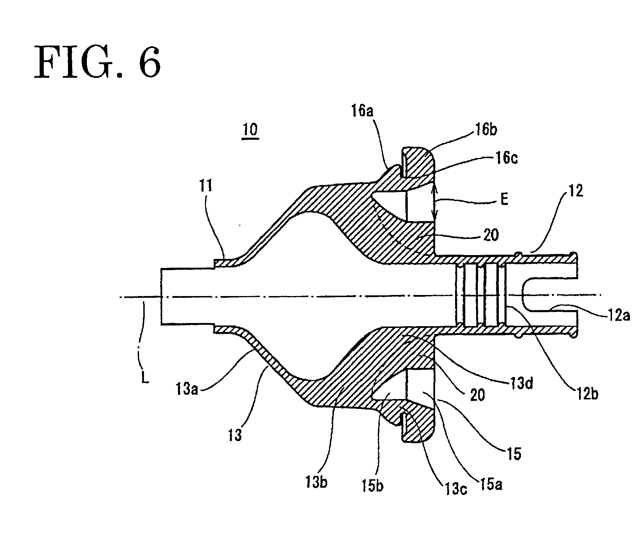

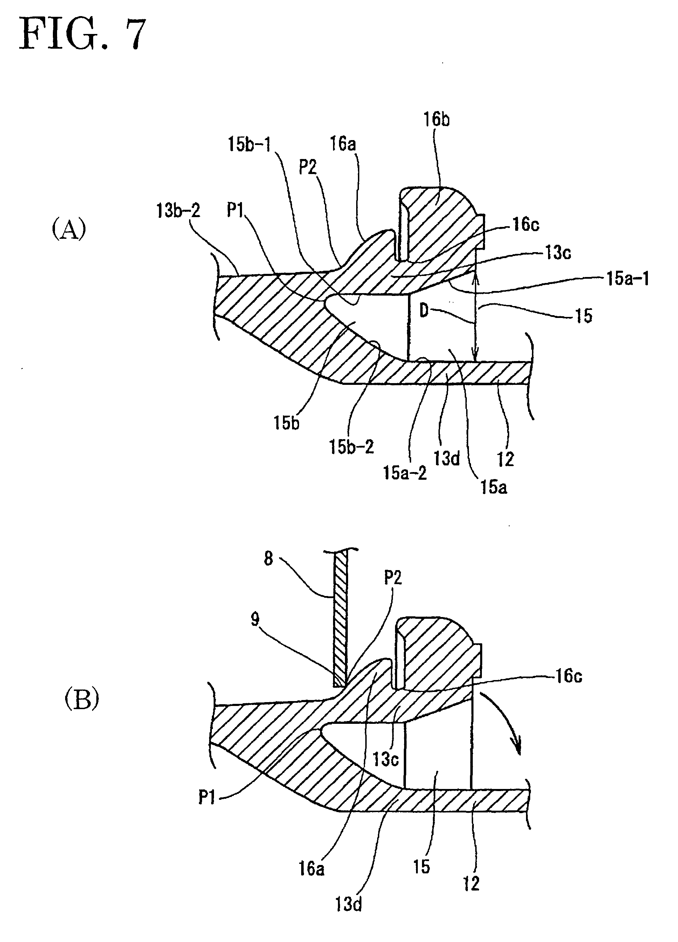

Hereinafter, a second preferred embodiment of the present invention is described with reference to FIGS. 4 to 8, wherein same or similar parts are denoted with same or similar reference numerals as in the first embodiment.

As shown in FIG. 4, a grommet 10 according to a second embodiment is integrally or unitarily formed of a resilient material, e.g. a rubber or elastomer and is such that a widened tube portion 13 is continuously formed between first and second small-diameter tube portion 11, 12 which are provided at front and rear sides with respect to insertion direction. Since a through hole formed in a body panel to be engaged with the grommet 10 is oblong, the widened tube portion 13 is also oblong.

Accordingly, since the inner tube 13d is circular and the outer tube 13c is oblong, clearances of the cut-away portion 15 at opposite sides 15x along a longer axis are larger while clearances thereof at opposite sides 15y along a shorter axis are small.

In order to substantially equal a dimension of the clearances at the longer axis side to a dimension D of the clearances at the shorter axis side, a pair of projections are formed on the outer circumferential surface of the inner tube 13d (i.e. the inner circumferential surface of the cut-away portion 15) along the substantially entire length in longitudinal direction from the back end to the opening end of the cut-away portion 15. In other words, a distance E between the projecting end of the projection 20 and the inner circumferential surface of the outer tube 13c is made substantially equal to the dimension D (D ≅ E). Further, the projecting distance of the projections 20 is larger at the opening side, so that the clearances E between the projections 20 and the outwardly widening outer tube can be a specified value or lower.

The dimensions D, E of the clearances are set such that the outer diameter of the vertical wall 16b is larger than the inner diameter of the through hole 9 of the body panel 8 so as to make it impossible for the vertical wall 16b to pass through the through hole 9 even at the time of a maximum deformation where the outer tube 13c is inclined toward the cut-away portion 15 to contact the outer circumferential surface of the inner tube 13d at the shorter axis side while contacting the projecting ends of the projections 20 at the longer axis side.

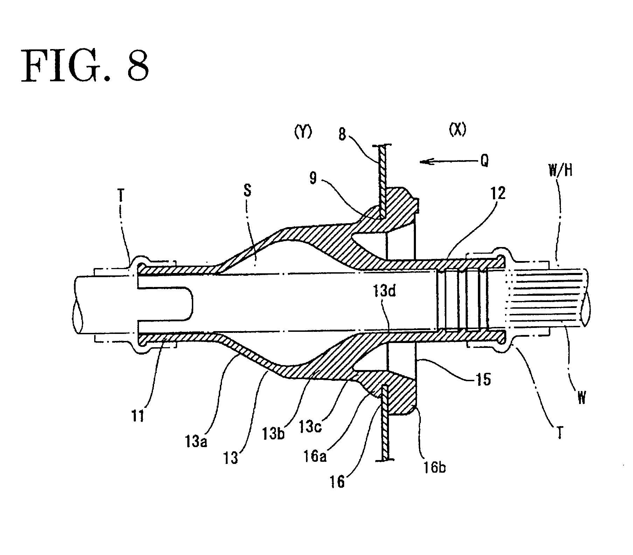

An operation of mounting the grommet 10 according to the second embodiment is similar to that of the first embodiment. Thus, an operation of mounting the grommet 10 thus constructed on the wiring harness W/H as shown in FIG. 8 and pushing it into the through hole 9 formed in the body panel 8 from the engine compartment (X) to a passenger compartment (Y) is described.

In addition, when the body panel 8 touches the slanted wall 16a during the above passage, the inner tube 13d is first deformed inwardly. When the body panel 8 is brought into contact with the slanted wall 16a without deforming the outer tube 13c outwardly, the outer tube 13c never fails to be deformed inwardly so that the slanted wall 16a passes through the through hole 9.

Furthermore, when the outer tube 13c is deformed to incline toward the cut-away portion 15, its deformation is restricted by the projections 20 although the clearances at the longer axis side are large. A degree of deformation of the outer tube 13c in contact with the projections 20 is substantially the same as a maximum degree of deformation thereof at the shorter axis side. Even if the outer tube 13c is maximally deformed to contact the projections 20, the vertical wall 16b does not pass through the through hole 9 since the outer diameter thereof is larger than the inner diameter of the through hole 9. As a result, the vertical wall 16b can be brought into contact with a wall surface 9a at the insertion side.

Upon passing through the through hole 9, the slanted wall 16a is restored to its original shape to tightly hold the body panel 8 in cooperation with the vertical wall 16b, and the grommet 10 is mounted on the body panel 8 with the inner circumferential surface of the through hole 9 held in contact with the groove bottom surface 16c.

Thus, the grommet 10 can be locked by one pushing motion in one direction Q from the engine compartment (X) while being inserted into the through hole 9 formed in the body panel 8.

It should be noted that the grommet 10 functions in the same manner in the case of being pulled from the passenger compartment.

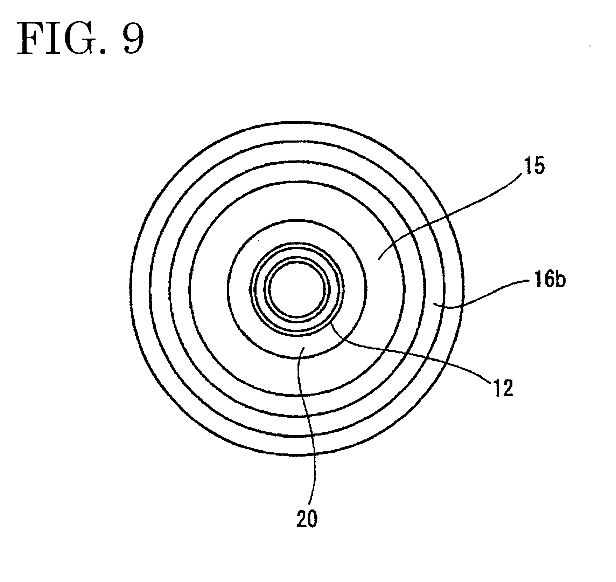

FIG. 9 shows a grommet 10' according to a third embodiment. In order to conform to a case where the through hole of the body panel is circular (right circular), the widened tube portion 13 is circular ring-shaped and the outer tube 13c has a circular cross section. Although a clearance between the inner tube 13d having a circular cross section and the outer tube 13c which face each other with the cut-away portion 15 provided therebetween is same over the entire circumference, an inclination preventing projection 20 is provided on the outer circumferential surface of the inner tube 13d over the entire circumference.

The above construction can securely prevent the outer tube 13c from passing through the through hole by being excessively inclined inwardly during the insertion of the grommet into the through hole.

As is clear from the above description and similar to the first embodiment, the position of the cut-away portion is set more radially inward than the base end position of the slanted wall to be deformed inwardly upon coming into contact with the body panel in the grommet according to the present invention. Thus, the slanted wall never fails to be deformed toward the inner side of the cut-away, with the result that the grommet pushing or pulling operation can be smoothly performed with a small insertion force.

Further, since the cut-away portion is widened at its opening side, the outer tube provided with the slanted wall and the vertical wall forming the body locking recess can be easily deformed toward the cut-away portion. Therefore, the insertion force required to mount the grommet can be further reduced.

Further, in the case that the outer tube of the widened tube portion is excessively inclined due to the presence of the cut-away portion, the contact of the projection therewith prevents the grommet from passing through the through hole of the body panel. Particularly, even if the through hole of the body panel is oblong to make the cut-away portion of the grommet oblong and make clearances between the cut-away portion and the outer tube at the longer axis side larger, the outer tube from which the body locking recess is projecting is prevented from inclining since the projections are provided on the inner tube. Therefore, an undesirable event where the grommet passes through the through hole without being able to engage the body panel formed with the body locking recess can be prevented from occurring.

### LIST OF REFERENCE NUMERALS

- 8: body panel
- 9: through hole
- 10: grommet
- 11: first small-diameter tube portion
- 12: second small-diameter tube portion
- 13: widened tube portion
- 13a: conic portion
- 13b: large-diameter portion
- 13c: outer tube
- 13d: inner tube
- 15: cut-away portion
- 15a: opening side
- 15b: back side
- 16: body locking recess
- 16a: slanted wall
- 16b: vertical wall
- W/H: wiring harness
- W: wire bundle

## Claims

1. A grommet (10; 10') which is insertable into a through hole (9) formed in a body panel (8) in one direction (Q) to be engaged with the through hole (9) while being mounted on a wiring harness (W/H), comprising:
a first small-diameter tube portion (11) and a second small-diameter tube portion (12) provided at the opposite sides of the grommet (10; 10') with respect to longitudinal direction,
a widened tube portion (13) provided between the first and second small-diameter tube portions (11, 12),
a cut-away portion (15) which is substantially continuous with the second small-diameter tube portion (12), thereby branching the widened tube portion (13) into an outer tube (13c) and an inner tube (13d) substantially continuous with the second small-diameter tube portion (12), and
a body locking recess (16) defined in the outer tube (13c), the body locking recess (16) being located more backward than a forward end position (P1) of the cut-away portion (15) along the longitudinal direction of the grommet (10; 10'),
wherein the forward end position (P1) of the cut-away portion (15) is located more radially inwardly than a bottom portion (16c) of the body locking recess (16), so that when the body panel (8) is brought into contact with a slanted wall (16a) of the outer tube (13c) at an insertion side while the grommet (10; 10') is being pushed into the through hole (9) formed in the body panel (8), at least a portion of the outer tube (13c) is deformed toward the cut-away portion (15)
**characterized in that**
the back side (15b) of the cut away portion (15) has a straight outer circumferential surface (15b1) which is located more radially inwardly than a bottom portion (16c) of the body locking recess, so that at least a portion of the outer tube (13c) is deformed inwardly when the slanted wall (16a) comes into contact with the body panel (8) upon passing through the through hole (9)
and the opening side (15a) of the cut-away portion (15) located radially inwardly of a radial wall (16b) of the outer tube (13c) has an outer circumferential surface (15a-1) slanted to widen toward an opening end of the cut-away portion (15) and which is continuous with said straight outer circumferential surface (15b-1).

2. A grommet according to claim 1, wherein the cut-away portion (15) is formed to extend forward from the rear end surface (13b-3) of the widened tube portion (13).

3. A grommet according to one or more of the preceding claims, wherein the body locking recess (16) is defined by a slanted wall (16a) and a substantially radial wall (16b) which project from the outer circumferential surface (13b-2) of a portion of the outer tube (13c).

4. A grommet according to one or more of the preceding claims, wherein a portion (13d-2) of the inner tube (13d) branched by the cut-away portion (15) and continuous with the second small-diameter tube portion (12) is made thinner than a base portion (13d-1) thereof branched from the outer tube (13c).

5. A grommet according to one or more of the preceding claims, further comprising:
an inclination preventing projection (20) formed on the outer circumferential surface of the inner tube (13d) along longitudinal direction to prevent the outer tube (13c) from inclining.

6. A grommet according to claim 5, wherein the outer tube (13c) of the widened tube portion (13) has an oblong cross section, the inner tube (13d) has a substantially circular cross section, the inclination preventing projection (20) is provided on an outer circumferential surface of the inner tube (13d) corresponding to a longer axis side.

7. A grommet according to claim 6, wherein the inclination preventing projection (20) is provided so that a distance (D) between the projecting end of the inclination preventing projection (20) and the inner circumferential surface of the outer tube (13c) is substantially the same as a distance (E) between the outer circumferential surface of the inner tube (13d) and the inner circumferential surface of the outer tube (13c) at a shorter axis side.

8. A grommet according to one or more of the preceding claims 5 to 7, wherein the inclination preventing projection (20) projects a longer distance at the opening end side (15a) of the cut-away portion (15).

## Patentansprüche

1. Dichtungstülle (10; 10'), welche in ein Durchtrittsloch (9), welches in einem Körperpaneel bzw. einer Körpertafel (8) ausgebildet ist, in einer Richtung (Q) einsetzbar ist, um mit dem Durchtrittsloch (9) in Eingriff zu gelangen, während sie auf eine Verdrahtung bzw. Verkabelung (W/H) montiert ist, umfassend:
einen ersten Rohrabschnitt (11) mit geringem Durchmesser und einen zweiten Rohrabschnitt (12) mit geringem Durchmesser, welche an den gegenüberliegenden Seiten der Dichtungstülle (10; 10') in bezug auf eine Längsrichtung vorgesehen sind,
einen erweiterten Rohrabschnitt (13), welcher zwischen dem ersten und zweiten Rohrabschnitt (11, 12) mit geringem Durchmesser vorgesehen ist,
einen weggeschnittenen Abschnitt (15), welcher im wesentlichen anschließend an den zweiten Rohrabschnitt (12) mit geringem Durchmesser ist, wodurch der erweiterte Rohrabschnitt (13) in ein äußeres bzw. Außenrohr (13c) und ein inneres bzw. Innenrohr (13d) im wesentlichen anschließend an den zweiten Rohrabschnitt mit geringem Durchmesser (12) verzweigt, und
eine einen Körper verriegelnde Vertiefung (16), welche in dem Außenrohr (13c) definiert ist, wobei die einen Körper verriegelnde Vertiefung (16) weiter rückwärts als eine vordere Endposition (P1) des weggeschnittenen Abschnitts (15) entlang der Längsrichtung der Dichtungstülle (10; 10') angeordnet ist,
wobei die vordere Endposition (P1) des weggeschnittenen Abschnitts (15) radial weiter einwärts als ein Bodenabschnitt (16c) der einen Körper verriegelnden Vertiefung (16) angeordnet ist, so daß, wenn das Körperpaneel (8) in Kontakt mit einer geneigten bzw. abgeschrägten Wand (16a) des Außenrohrs (13c) an einer Einsetzseite gebracht ist bzw. wird, während die Dichtungstülle (10; 10') in das Durchtrittsloch (9) gedrückt ist bzw. wird, welches in dem Körperpaneel (8) ausgebildet ist, wenigstens ein Abschnitt des Außenrohrs (13c) in Richtung zu dem weggeschnittenen Abschnitt (15) deformiert bzw. verformt ist,
**dadurch gekennzeichnet, daß**
die Rückseite (15b) des weggeschnittenen Abschnitts (15) eine gerade äußere Umfangsoberfläche (15b1) aufweist, welche radial weiter einwärts als ein Bodenabschnitt (16c) der einen Körper verriegelnden Vertiefung angeordnet ist, so daß wenigstens ein Abschnitt des Außenrohrs (13c) nach innen deformiert ist, wenn die abgeschrägte Wand (16a) in Kontakt mit dem Körperpaneel (8) bei einem Durchtreten durch das Durchtrittsloch (9) gelangt,
und die Öffnungsseite (15a) des weggeschnittenen Abschnitts (15), welche radial einwärts von einer radialen Wand (16b) des Außenrohrs (13c) angeordnet ist, eine äußere Umfangsoberfläche (15a-1) aufweist, welche abgeschrägt ist, um sich zu einem Öffnungsende des weggeschnittenen Abschnitts (15) aufzuweiten, und welche an die gerade äußere Umfangsoberfläche (15b-1) anschließend ist.

2. Dichtungstülle nach Anspruch 1, wobei der weggeschnittene Abschnitt (15) ausgebildet ist, um sich nach vorne von der rückwärtigen Endoberfläche (13b-3) des aufgeweiteten Rohrabschnitts (13) zu erstrecken.

3. Dichtungstülle nach einem oder mehreren der vorangehenden Ansprüche, wobei die einen Körper verriegelnde Vertiefung (16) durch eine abgeschrägte Wand (16a) und eine im wesentlichen radiale Wand (16b) definiert ist, welche von der äußeren Umfangsoberfläche (13b-2) eines Abschnitts des Außenrohrs (13c) vorragt.

4. Dichtungstülle nach einem oder mehreren der vorangehenden Ansprüche, wobei ein Abschnitt (13d-2) des Innenrohrs (13d), welches durch den weggeschnittenen Abschnitt (15) verzweigt ist und an den zweiten Rohrabschnitt (12) geringen Durchmessers anschließt, dünner als ein Basisabschnitt (13d-1) davon gemacht ist, welcher von dem Außenrohr (13c) abzweigt.

5. Dichtungstülle nach einem oder mehreren der vorangehenden Ansprüche, weiters umfassend:
einen eine Neigung verhindernden Vorsprung (20), welcher an der äußeren Umfangsoberfläche des Innenrohrs (13d) entlang einer Längsrichtung ausgebildet ist, um das Außenrohr (13c) an einem Neigen zu hindern.

6. Dichtungstülle nach Anspruch 5, wobei das Außenrohr (13c) des aufgeweiteten Rohrabschnitts (13) einen länglichen Querschnitt aufweist, das Innenrohr (13d) einen im wesentlichen kreisförmigen Querschnitt aufweist, der eine Neigung verhindernde Vorsprung (20) an einer äußeren Umfangsoberfläche des Innenrohrs (13d) entsprechend einer Seite einer längeren Achse angeordnet ist.

7. Dichtungstülle nach Anspruch 6, wobei der eine Neigung verhindernde Vorsprung (20) so vorgesehen ist, daß ein Abstand (D) zwischen dem vorragenden Ende des eine Neigung verhindernden Abschnitts (20) und der inneren Umfangsoberfläche des Außenrohrs (13c) im wesentlichen derselbe wie ein Abstand (E) zwischen der äußeren Umfangsoberfläche des Innenrohrs (13d) und der inneren Umfangsoberfläche des Außenrohrs (13c) an einer Seite einer kürzeren Achse ist.

8. Dichtungstülle nach einem oder mehreren der vorangehenden Ansprüche 5 bis 7, wobei der eine Neigung verhindernde Abschnitt (20) um einen längeren Abstand an der Seite (15a) des Öffnungsendes des weggeschnittenen Abschnitts (15) vorragt.

## Revendications

1. Manchon de traversée (10 ; 10') qui peut être inséré dans un trou traversant (9), ménagé dans un panneau de carrosserie (8), dans une première direction (Q) pour venir en prise avec le trou traversant (9) pendant son montage sur un faisceau de câbles (W/H), comprenant :
une première partie tubulaire de petit diamètre (11) et une deuxième partie tubulaire de petit diamètre (12) prévues sur les côtés opposés du manchon (10 ; 10') avec référence à la direction longitudinale,
une partie tubulaire élargie (13) prévue entre les première et deuxième parties tubulaires de petit diamètre (11, 12),
une partie évidée (15) qui est sensiblement en continuité de la deuxième partie tubulaire de petit diamètre (12), afin de diviser la partie tubulaire élargie (13) en un tube extérieur (13c) et un tube intérieur (13d) qui est sensiblement en continuité de la deuxième partie tubulaire de petit diamètre (12), et
un évidement de verrouillage de carrosserie (16) défini dans le tube extérieur (13c), l'évidement de verrouillage de carrosserie (16) étant situé plus vers l'arrière qu'une position d'extrémité avant (P1) de la partie évidée (15) dans la direction longitudinale du manchon (10 ; 10'),
dans lequel la position d'extrémité avant (P1) de la partie évidée (15) est située plus radialement vers l'intérieur qu'une partie de fond (16c) de l'évidement de verrouillage de carrosserie (16) de sorte que, lorsque le panneau de carrosserie (8) est amené en contact avec une paroi inclinée (16a) du tube extérieur (13c) sur un côté d'insertion pendant que le manchon (10 ; 10') est poussé dans le trou traversant (9) ménagé dans le panneau de carrosserie (8), au moins une partie du tube extérieur (13c) est déformée vers la partie évidée (15),
**caractérisé en ce que**
le côté arrière (15b) de la partie évidée (15) présente une surface circonférentielle extérieure cylindrique (15b1) qui est située plus radialement vers l'intérieur qu'une partie de fond (16c) de l'évidement de verrouillage de carrosserie, de sorte qu'au moins une partie du tube extérieur (13c) se déforme vers l'intérieur lorsque la paroi inclinée (16a) vient en contact avec le panneau de carrosserie (8) lors du passage à travers le trou traversant, et
le côté d'ouverture (15a) de la partie évidée (15), situé radialement vers l'intérieur d'une paroi radiale (16b) du tube extérieur (13c), présente une surface circonférentielle extérieure (15a-1) qui est inclinée de manière à s'élargir vers une extrémité d'ouverture de la partie évidée (15) et qui est en continuité de la dite surface circonférentielle extérieure cylindrique (15b-1).

2. Manchon selon la revendication 1, dans lequel la partie évidée (15) est formée de manière à s'étendre vers l'avant à partir de la surface d'extrémité arrière (13b-3) de la partie tubulaire élargie (13).

3. Manchon selon une ou plusieurs des revendications précédentes, dans lequel l'évidement de verrouillage de carrosserie (16) est défini par une paroi inclinée (16a) et une paroi sensiblement radiale (16b) qui font saillie à partir de la surface circonférentielle extérieure (13b-2) d'une partie du tube extérieur (13c).

4. Manchon selon une ou plusieurs des revendications précédentes, dans lequel une partie (13d-2) du tube intérieur (13d) séparée par la partie évidée (15) et en continuité de la deuxième partie tubulaire de petit diamètre (12) est prévue plus mince que sa partie de base (13d-1) s'étendant à partir du tube extérieur (13c).

5. Manchon selon une ou plusieurs des revendications précédentes, comprenant en outre :
une saillie empêchant l'inclinaison (20) formée sur la surface circonférentielle extérieure du tube intérieur (13d) dans la direction longitudinale, pour empêcher le tube extérieur (13c) de s'incliner.

6. Manchon selon la revendication 5, dans lequel le tube extérieur (13c) de la partie tubulaire élargie (13) a une section transversale oblongue, le tube intérieur (13d) a une section transversale sensiblement circulaire, et la saillie empêchant l'inclinaison (20) est prévue sur une surface circonférentielle extérieure du tube intérieur (13d) correspondant à un côté de plus grand axe.

7. Manchon selon la revendication 6, dans lequel la saillie empêchant l'inclinaison (20) est prévue de sorte qu'une distance (D) entre l'extrémité saillante de la saillie empêchant l'inclinaison (20) et la surface circonférentielle intérieure du tube extérieur (13c) est sensiblement la même qu'une distance (E) entre la surface circonférentielle extérieure du tube intérieur (13d) et la surface circonférentielle intérieure du tube extérieur (13c) sur un côté de plus petit axe.

8. Manchon selon une ou plusieurs des revendications précédentes 5 à 7, dans lequel la saillie empêchant l'inclinaison (20) fait saillie d'une plus longue distance du côté de l'extrémité ouverte (15a) de la partie évidée (15).
